# EUROPÄISCHE PATENTANMELDUNG

(11) **EP 3 290 108 A1**
(43) Veröffentlichungstag der Anmeldung: **07.03.2018**
(21) Anmeldenummer: 17020383.0
(22) Anmeldetag: 24.08.2017
(51) Int. Cl.: B01J 19/32

(54) **KOLONNE MIT PACKUNG, VERFAHREN ZUM STOFF- UND/ ODER ENERGIEAUSTAUSCH ZWISCHEN EINER FLÜSSIGEN UND EINER GASFÖRMIGEN PHASE UND HERSTELLUNGSVERFAHREN FÜR EINE PACKUNG**

(30) Priorität: 01.09.2016 EP 16001914
(71) Anmelder: Linde Aktiengesellschaft, 80331 München (DE)
(72) Erfinder: Hoffmann, Rainer, 82008 Unterhaching (DE)
(74) Vertreter: Meilinger, Claudia Sabine

(57) **Zusammenfassung**

Die Erfindung betrifft eine Packung (10) für eine Kolonne (20) zum Stoff- und oder Energieaustausch zwischen einer flüssigen Phase (F) und einer gasförmigen Phase (G) aufweisend eine Mehrzahl von Materiallagen (11), die jeweils eine Mehrzahl von alternierend angeordneten Bergen (12) und Tälern (13) aufweisen, wobei jeweils ein Berg (12) mit einem benachbarten Tal (13) über eine Flanke (14) verbunden ist, und wobei die Materiallagen (11) jeweils eine Mehrzahl von über die Materiallagen (11) verteilten Durchgangsöffnungen (15) aufweisen, wobei das Öffnungsverhältnis von durch die Durchgangsöffnungen (15) gebildeter freier Öffnungsfläche zu geschlossener Fläche auf den Bergen (12) und Tälern (13) größer ist als auf den Flanken (14).

Die Erfindung betrifft weiterhin eine Kolonne sowie ein Herstellungsverfahren für eine erfindungsgemäße Packung (10) sowie ein Verfahren zum Stoff- und oder Energieaustausch zwischen einer flüssigen Phase (F) und einer gasförmigen Phase (G) mittels der erfindungsgemäßen Packung (10).

## Beschreibung

Die Erfindung betrifft eine Kolonne zum Stoff- und/ oder Energieaustausch zwischen einer flüssigen und einer gasförmigen Phase, ein Herstellungsverfahren für eine erfindungsgemäße Packung sowie ein Verfahren zum Stoff- und/ oder Energieaustausch zwischen einer flüssigen und einer gasförmigen Phase.

Aus dem Stand der Technik sind Kolonnen (Säulen) mit Packungen bekannt, bei denen eine gasförmige Phase in einer strukturierten Packung aufsteigt, wobei im Gegenstrom eine flüssige Phase auf die Packung aufgegeben wird, die in intensiven Kontakt, insbesondere zum Stoff- und/oder Energieaustausch mit der gasförmigen Phase gebracht werden soll.

Derartige Packungen bestehen aus einer strukturierten Anordnung von mehreren Materiallagen (z.B. Blechen). Diese Materiallagen weisen nach dem Stand der Technik häufig ein primäres Faltungsmuster (mit einem definierten Faltungswinkel) aus (Wellen-)bergen und (Wellen-)tälern auf, welche mittels Flanken verbunden sind.

Weiterhin weisen derartige Materiallagen nach dem Stand der Technik häufig gleichmäßig über die gesamte Materiallage, also Berge, Täler und Flanken, verteilte Durchgangslöcher auf. Diese vergleichmäßigen die Gasströmung zwischen den Materiallagen (z.B. Blechen), wirken aber auch als Hindernis für die Flüssigströmung. Die Flüssigströmung teilt sich auf, wenn sie auf ein eine Durchgangsöffnung trifft. Dies ist vorteilhaft, da eine verbreiterte Flüssigströmung zu einer gleichmäßigeren Ausnutzung der Packung führt. Die Durchgangsöffnungen sind nach dem Stand der Technik über die gesamte Materiallage verteilt.

Aufgrund dessen ergibt sich die Aufgabe, eine Packung bzw. eine Kolonne sowie ein Verfahren für einen verbesserten Stoff- und/ oder Energieaustausch zwischen einer flüssigen Phase und einer gasförmigen Phase zur Verfügung zu stellen.

Diese Aufgabe wird durch die Kolonne nach Anspruch 1, das Herstellungsverfahren nach Anspruch 9 und das Verfahren zum Stoff- und/ oder Energieaustausch nach Anspruch 10 gelöst. Spezielle Ausgestaltungen der Kolonne sind in den Ansprüchen 2 bis 8 angegeben. Diese werden im Folgenden beschrieben. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Ein erster Aspekt der Erfindung betrifft eine Kolonne, die eine Packung aufweist, die eine Mehrzahl von parallel angeordneten Materiallagen (z.B. Blechen) aufweist, die sich jeweils entlang einer Ebene erstrecken, wobei die jeweilige Materiallage eine Mehrzahl von alternierend angeordneten Bergen und Tälern aufweist, wobei jeweils ein Berg mit einem benachbarten Tal über eine Flanke verbunden ist, und wobei die jeweilige Materiallage jeweils eine Mehrzahl von über die Materiallage verteilten Durchgangsöffnungen aufweist, und wobei die Packung derart in der Kolonne zum Stoff- und oder Energieaustausch zwischen einer flüssigen Phase und einer gasförmigen Phase angeordnet ist, dass die Ebenen, entlang derer sich die Materiallagen erstrecken, jeweils parallel zu einer Kolonnenachse angeordnet sind oder eine Neigung bezüglich des Kolonnenquerschnitts aufweisen, der senkrecht zu der Kolonnenachse verläuft, wobei die Kolonne dazu ausgebildet ist, die flüssige Phase und die gasförmige Phase entlang der Kolonnenachse zu leiten, und wobei für die jeweilige Materiallage das Öffnungsverhältnis von durch die Durchgangsöffnungen gebildeter freier Öffnungsfläche zu nicht von Durchgangsöffnungen bedeckter geschlossener Fläche auf den Bergen und Tälern größer ist als auf den Flanken, und wobei die Materiallagen eine Sekundärstruktur aufweisen.

Dabei sind die Berge bzw. Täler gebogene bzw. gekrümmte Bereiche der Materiallagen, welche insbesondere die größte Krümmung der jeweiligen Materiallage aufweisen. Die Flanken sind insbesondere ebene oder im Wesentlichen ebene Bereiche der Materiallagen, die jeweils einen Berg mit einem Tal verbinden. Die Flanken können insbesondere auch eine Krümmung aufweisen, wobei insbesondere die Krümmungen der jeweiligen Flanken (falls vorhanden) kleiner sind als die größte Krümmung der Berge bzw. Täler. Die Berge und Täler der Materiallagen können alternativ auch als Kopfabschnitte (Berge) bzw. Fußabschnitte (Täler) bezeichnet werden. Ein Kopfabschnitt ist dann jeweils über je eine Flanke mit den beiden benachbarten Fußabschnitten verbunden.

Die Berge und Täler verlaufen insbesondere unter einem Winkel von 30° bis 70°, z.B. 45° oder 60° zur Kolonnenachse.

Messungen und Rechnungen haben überraschenderweise gezeigt, dass der überwiegende Teil der Flüssigkeit in den Tälern der Primärstruktur der Packung läuft. Ein erhöhter Flüssigkeitsteilstrom läuft also über den Innenseiten der Wellentäler bzw. Wellenberge (je nach Orientierung der Materiallagen in der Packung) ab.

Daher sind die Durchgangsöffnungen also in größerer Dichte an der Bergen und Tälern angeordnet als an den Flanken der jeweiligen Materiallage, das heißt an den Bergen und Tälern sind eine größere Anzahl von Durchgangsöffnungen pro Fläche der Materiallage angeordnet als an den Flanken.

Dies hat den Vorteil einer verbesserten Spreitung (d.h. Ausbreitung und flächige Verteilung an der Oberfläche der Packung) der flüssigen Phase beim Durchgang durch die Packung.

Durch eine vermehrte Anordnung von Durchgangsöffnungen an den Maxima der Wellen wird die Leistung der Packung verbessert, da an den Durchgangsöffnungen der Flüssigkeitsfilm in horizontaler und somit radialer Richtung (also senkrecht zur Kolonnenachse) abgeleitet wird und somit eine bessere Durchmischung von flüssiger und gasförmiger Phase erfolgt.

Insbesondere verlaufen die Berge und Täler der benachbarten Materiallagen parallel zueinander.

Gemäß einer Ausführungsform beträgt das gesamte Öffnungsverhältnis von durch die Durchgangsöffnungen gebildeter freier Öffnungsfläche zu geschlossener Fläche auf der Gesamtfläche der Materiallagen, d.h. auf den Bergen, Tälern und Flanken, 6% bis 16 %, insbesondere 11 %.

Gemäß einer weiteren Ausführungsform sind 70 % bis 100 % der Durchgangsöffnungen auf den Bergen und Tälern der Materiallagen angeordnet. Diese Prozentangabe ist bezogen auf die Gesamtanzahl der Durchgangsöffnungen auf der jeweiligen Materiallage. Die Durchgangsöffnungen der jeweiligen Materiallage können dabei insbesondere eine einheitliche Öffnungsfläche aufweisen.

Gemäß einer weiteren Ausführungsform sind 0 % bis 30 % der Durchgangsöffnungen auf den Flanken der Materiallagen angeordnet. Diese Prozentangabe ist bezogen auf die Gesamtanzahl der Durchgangsöffnungen auf der jeweiligen Materiallage. Die Durchgangsöffnungen der jeweiligen Materiallage können dabei insbesondere eine einheitliche Öffnungsfläche aufweisen.

Gemäß einer weiteren Ausführungsform sind die Durchgangsöffnungen lediglich auf den Bergen und Tälern angeordnet, wobei die Flanken frei von Durchgangsöffnungen sind.

Gemäß einer weiteren Ausführungsform sind die Durchgangsöffnungen kreisförmig ausgebildet.

Wie eingangs bereits dargelegt. weisen die Materiallagen insbesondere eine Sekundärstruktur auf. Das heißt, die Oberfläche der Materiallagen ist nicht vollständig glatt, sondern weist zusätzlich zu der durch die Berge und Täler gebildeten Primärstruktur eine, insbesondere regelmäßige, Strukturierung bzw. Sekundärstruktur auf. Diese Strukturierung kann z.B. durch Aussparungen oder Erhebungen ausgebildet sein. Die Aussparungen können z.B. als Kerben oder Rillen ausgeformt sein.

Gemäß einer weiteren Ausführungsform ist die Sekundärstruktur durch eine Mehrzahl von quer zu den Bergen und Tälern verlaufenden Rillen gebildet.

Die aufgrund der erfindungsgemäßen Anordnung der Durchgangsöffnungen verbesserte Packungsleistung wird durch die Sekundärstruktur, die insbesondere quer zur Kolonnenachse verlaufende Kleinkanäle bildet, noch weiter verbessert.

Gemäß einer weiteren Ausführungsform weist die Packung mindestens ein Packungspaket auf, das aus einer Mehrzahl von mechanisch verbundenen Materiallagen gebildet ist.

Gemäß einer weiteren Ausführungsform sind die Materiallagen einzeln in der Kolonne angeordnet, wobei sie lediglich über die Kolonne miteinander verbunden sind.

Gemäß einer weiteren Ausführungsform bilden die Materiallagen zumindest ein Packungspaket, wobei die Materiallagen in dem Packungspaket mechanisch miteinander verbunden sind.

Gemäß einer weiteren Ausführungsform sind in der Kolonne sowohl einzelne Materiallagen als auch mindestens ein Packungspaket angeordnet.

Ein weiterer Aspekt der Erfindung betrifft ein Verfahren zur Herstellung einer Packung, wobei in einer Mehrzahl von Materiallagen jeweils eine Mehrzahl von alternierend angeordneten Bergen und Tälern gebildet werden, so dass jeweils ein Berg mit einem benachbarten Tal über eine Flanke verbunden ist, und wobei in den Materiallagen jeweils eine Mehrzahl von Durchgangsöffnungen derart gebildet wird, dass das Öffnungsverhältnis von durch die Durchgangsöffnungen gebildeter freier Öffnungsfläche zu geschlossener Fläche auf den Bergen und Tälern größer ist als auf den Flanken, wobei insbesondere die Durchgangsöffnungen in einem ebenen Zustand der Materiallagen gebildet werden, wobei nach dem Bilden der Durchgangsöffnungen die Berge und Täler der Materiallagen gebildet werden.

Hierbei wird die Fertigung insbesondere so synchronisiert, dass die Durchgangsöffnungen im korrekten Winkel und Abstand der Primärstruktur eingebracht werden. Diese Winkel und Abstände werden insbesondere noch um die Verformungen des Blechs korrigiert, die während der Primärstrukturfaltung entstehen. Die Primärstrukturfaltung wird insbesondere in der Fertigungsstraße mit der Lochung synchronisiert, damit die Durchgangsöffnungen auf den Maxima der Faltung angeordnet werden. Insbesondere wird die Erzeugung der Primärstruktur (Wellung) mit der zuvor eingebrachten Perforation synchronisiert, d.h. beim Einbringen der Primärstruktur werden die Maxima der Wellen an vordefinierten Lochreihen ausgebildet.

Gemäß einer weiteren Ausführungsform werden die Materiallagen mittels eines 3D-Druckverfahrens gedruckt, wobei die Durchgangsöffnungen, die Berge und die Täler mittels des 3D-Druckverfahrens gedruckt werden.

Mittels 3D-Druck können vorteilhafterweise die Durchgangsöffnungen und die Berge und Täler in einem Herstellungsschritt gleichzeitig gebildet werden.

Die Materiallagen können dabei insbesondere durch bekannte 3D-Druckverfahren wie z.B. Selective Laser Sintering (SLS), Electron Beam Melting/ Electron Beam Additive Manufacturing (EBM/EBAM), Fused Filament Fabrication (FFF), Schmelzschichtung (z.B. Fused Deposition Modeling, FDM), Stereolithographie (STL, SLA), Digital Light Processing (DLP), Multi Jet Modeling (MJM), Polyjet-Verfahren, Film Transfer Imaging (FTI), Laserauftragsschweißen oder Laminated Object Modeling (LOM) erzeugt werden.

Ein weiterer Aspekt der Erfindung betrifft ein Verfahren zum Stoff- und/ oder Energieaustausch zwischen einer flüssigen Phase und einer gasförmigen Phase, insbesondere mittels einer Kolonne nach dem zweiten Aspekt der Erfindung, wobei die flüssige Phase und die gasförmige Phase im Gegenstrom durch eine Packung nach dem ersten Aspekt der Erfindung geleitet werden, und wobei die flüssige Phase überwiegend an den Tälern der Materiallagen durch die Packung geleitet wird.

Insbesondere ist dabei die Packung in einer Kolonne angeordnet, wobei die flüssige Phase und die gasförmige Phase im Gegenstrom entlang einer Kolonnenachse durch die Packung geleitet werden.

Derartige Kolonnen weisen üblicherweise mehrere Lagen von Packungen auf, die insbesondere in Richtung der Kolonnenachse gestapelt werden.

Weitere Einzelheiten und Vorteile der Erfindung werden durch die nachfolgende Beschreibung von Ausführungsbeispielen an Hand von Figuren erläutert. Es zeigen:
- Fig. 1: eine schematische Darstellung einer Materiallage einer erfindungsgemäßen Packung,
- Fig. 2: eine Kolonne mit einer erfindungsgemäßen Packung,
- Fig. 3: zeigt eine Orientierung einer Materiallage in einer erfindungsgemäßen Kolonne.

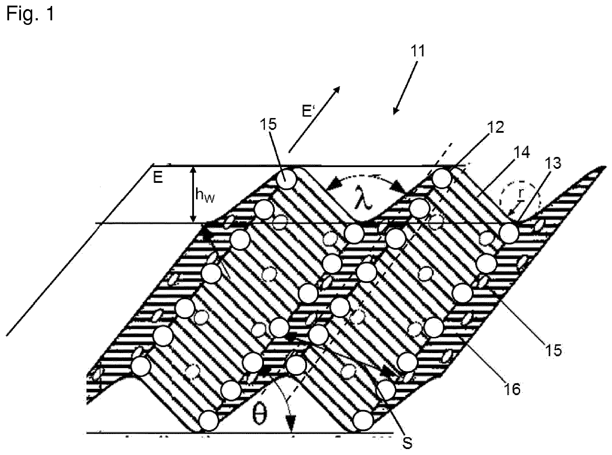

Im Einzelnen zeigt die Figur 1 eine perspektivische Teilansicht einer erfindungsgemäßen Materiallage 11, z.B. aus einem gefalteten Blech, die in einer Ebene E erstreckt ist. Die Materiallage 11 weist (z.B. aufgrund der Faltung) eine Primärstruktur aus Bergen 12 und Tälern 13 auf, wobei die Berge 12 jeweils mittels Flanken 14 mit benachbarten Tälern 13 verbunden sind.

Dabei sind die Berge12 bzw. Täler 13 gebogene bzw. gekrümmte Bereiche der Materiallagen 11, welche insbesondere die größte Krümmung der jeweiligen Materiallage 11 aufweisen. Die Flanken 14 sind insbesondere ebene oder im Wesentlichen ebene Bereiche der Materiallagen 11, die jeweils einen Berg 12 mit einem Tal 13 verbinden. Die Flanken 14 können insbesondere auch eine Krümmung aufweisen, wobei insbesondere die Krümmungen der jeweiligen Flanken 14 (falls vorhanden) kleiner sind als die größte Krümmung der Berge 12 bzw. Täler 13.
Eine Begrenzung zwischen einem Berg 12 und den angrenzenden Flanken 14 ist in der Figur 1 beispielhaft durch gestrichelte Linien skizziert.

Die Berge 12 und Täler 13 erstrecken sich dabei parallel zueinander in einer Erstreckungsrichtung E' und können jeweils einen Krümmungsradius r aufweisen. Die durch einen Berg 12 oder ein Tal 13 mit angrenzenden Flanken 14 gebildete Welle weist jeweils eine Wellenlänge s und eine Wellenhöhe h_{w} auf, wobei die Wellenlänge s senkrecht zur Erstreckungsrichtung E' entlang der Ebene E verläuft, und wobei die Wellenhöhe h_{w} senkrecht zu der Ebene E verläuft. Wenn die Ebene E, in der die Materiallage 11 erstreckt ist, parallel zu einer Horizontalen angeordnet ist, verläuft die Erstreckungsrichtung E' der Berge 12 und Täler 13 insbesondere unter einem Neigungswinkel θ zu der Horizontalen, wobei der Neigungswinkel θ insbesondere 45° beträgt. Benachbarte Flanken 14 weisen insbesondere an einem Tal 13 zueinander einen Wellenwinkel λ auf.

Die Materiallage 11 weist eine Mehrzahl von Durchgangsöffnungen 15 auf, wobei das Öffnungsverhältnis der durch die Durchgangsöffnungen 15 gebildeten freien Öffnungsfläche zu der nicht von Durchgangsöffnungen bedeckten geschlossenen Fläche der Materiallage 11 auf den Bergen 12 und Tälern 13 größer ist als auf den Flanken 14. An an den Bergen 12 und Tälern 13 sind also eine größere Anzahl von Durchgangsöffnungen 15 pro Fläche angeordnet als an den Flanken 14.

Die Materiallage 11 weist weiterhin eine Sekundärstruktur aus Rillen 16 auf, wobei die Rillen quer zur Erstreckungsrichtung E' verlaufen.

Eine erfindungsgemäße Packung 10 ist durch mehrere in Bezug auf ihre Ebene E parallel zueinander angeordnete Materiallagen 11 gebildet. Die Materiallagen 11 sind dabei so angeordnet, dass die Ebenen E parallel zu der Kolonnenachse a verlaufen. Dabei verlaufen die Berge 12 und Täler 13 unter einem Winkel, insbesondere 45° oder 60°, zu der Kolonnenachse a.

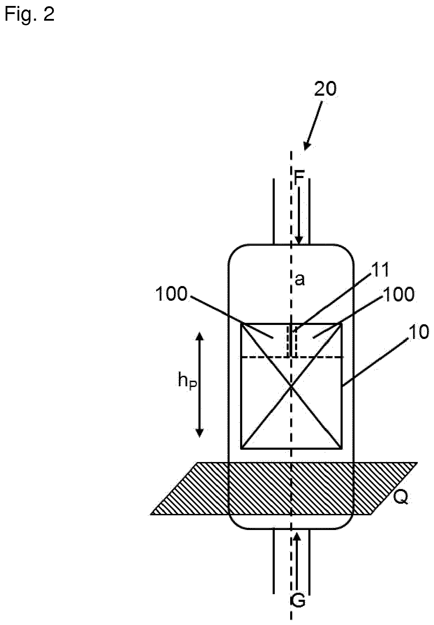

Die Figur 2 zeigt eine Kolonne 20 zum Energie- und/ oder Stoffaustausch zwischen einer flüssigen Phase F und einer gasförmigen Phase G mit einer Kolonnenachse a und einem senkrecht zu der Kolonnenachse a angeordneten Kolonnenquerschnitt Q. Die Kolonne 20 weist eine erfindungsgemäße Packung 10 auf. Eine beispielhaft dargestellte Lage der Packung 10 weist zwei Packungspakete 100 und eine zwischen den Packungspaketen 100 angeordnete einzelne Materiallage 11 auf.

Die flüssige Phase F und die gasförmige Phase G werden in der Kolonne 20 z.B. gegenläufig geführt, wobei die flüssige Phase F die Kolonne 20 von oben nach unten durchfließt, und wobei die gasförmige Phase G die Kolonne 20 von unten nach oben durchströmt. Dabei werden die flüssige Phase F und die gasförmige Phase G in der Packung 10 durchmischt.

Die flüssige Phase F fließt dabei größtenteils entlang der Täler 13 der Materiallagen 11 der Packung 10 und tritt dabei zumindest teilweise durch die an den Bergen 12 und Tälern 13 angeordneten Durchgangsöffnungen 15 hindurch, was zur besseren Verteilung der flüssigen Phase F beiträgt. Die gasförmige Phase G strömt ebenfalls durch die Durchgangsöffnungen 15, was zu einer homogenen Verteilung der gasförmigen Phase G beiträgt.

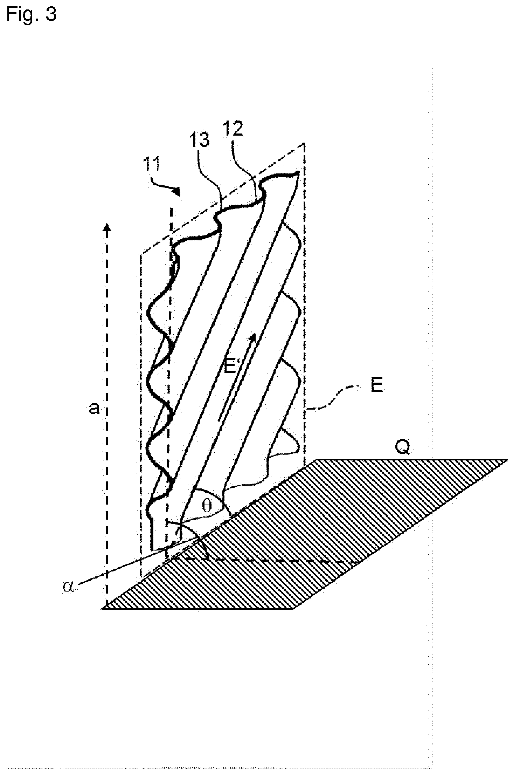

Die Figur 3 zeigt eine beispielhafte Orientierung einer Materiallage 11 in einer Kolonne 20. Die Materiallage 11 ist entlang einer Ebene E erstreckt, welche parallel zu der Kolonnenachse a, also senkrecht zu dem Kolonnenquerschnitt Q verläuft. Weiterhin ist eine Neigung α zwischen der Ebene E und dem Kolonnenquerschnitt Q gezeigt, wobei die Neigung α in dem gezeigten Beispiel 90° beträgt. Die Berge 12 und Täler 13 verlaufen schräg zu der Kolonnenachse a, insbesondere unter einem Winkel von 45° zur Kolonnenachse a.

Die Erstreckungsrichtung E' der Berge 12 und Täler 13 verläuft unter einem Neigungswinkel θ in Bezug auf die Kolonnenachse a.

**Bezugszeichenliste**

| | |
|---|---|
| 10 | Packung |
| 11 | Materiallage |
| 12 | Berg |
| 13 | Tal |
| 14 | Flanke |
| 15 | Durchgangsöffnung |
| 16 | Rille |
| 20 | Kolonne |
| 100 | Packungspaket |
| E | Ebene |
| E' | Erstreckungsrichtung |
| A | Kolonnenachse |
| hₚ | Packungshöhe |
| h_{w} | Wellenhöhe |
| R | Radius |
| S | Wellenlänge |
| Q | Kolonnenquerschnitt |
| α | Neigung |
| λ | Wellenwinkel |
| θ | Neigungswinkel |
| F | Flüssige Phase |
| G | Gasförmige Phase |

## Patentansprüche

1. Kolonne (20) zum Stoff- und/oder Energieaustausch zwischen einer flüssigen Phase und einer gasförmigen Phase, wobei die Kolonne (20) eine Packung (10) aufweist, die eine Mehrzahl von parallel angeordneten Materiallagen (11) aufweist, die sich jeweils entlang einer Ebene (E) erstrecken, wobei die jeweilige Materiallage (11) eine Mehrzahl von alternierend angeordneten Bergen (12) und Tälern (13) aufweist, wobei jeweils ein Berg (12) mit einem benachbarten Tal (13) über eine Flanke (14) verbunden ist, und wobei die jeweilige Materiallage (11) eine Mehrzahl von über die Materiallage (11) verteilten Durchgangsöffnungen (15) aufweist, und wobei die Packung (10) derart in der Kolonne (20) zum Stoff- und oder Energieaustausch zwischen einer flüssigen Phase (F) und einer gasförmigen Phase (G) angeordnet ist, dass die Ebenen (E), entlang derer sich die Materiallagen (11) erstrecken, jeweils parallel zu einer Kolonnenachse (a) angeordnet sind, oder eine Neigung (α) bezüglich eines Kolonnenquerschnitts (Q) aufweisen, der senkrecht zu einer Kolonnenachse (a) verläuft,
**dadurch gekennzeichnet,**
**dass** für die jeweilige Materiallage (11) das Öffnungsverhältnis von durch die Durchgangsöffnungen (15) gebildeter freier Öffnungsfläche zu geschlossener Fläche der jeweiligen Materiallage (11) auf den Bergen (12) und Tälern (13) größer ist als auf den Flanken (14), und dass die Materiallagen (11) eine Sekundärstruktur (16) aufweisen.

2. Kolonne (20) nach Anspruch 1, **dadurch gekennzeichnet, dass** das Öffnungsverhältnis von durch die Durchgangsöffnungen (15) gebildeter freier Öffnungsfläche zu geschlossener Fläche auf der Gesamtfläche der jeweiligen Materiallage (11), 6 % bis 16 %, insbesondere 11 %, beträgt.

3. Kolonne (20) nach Anspruch 1 oder 2, **dadurch gekennzeichnet, dass** 70 % bis 100 % der Durchgangsöffnungen (15) auf den Bergen (12) und Tälern (13) angeordnet sind.

4. Kolonne (20) nach einem der vorhergehenden Ansprüche, **dadurch gekennzeichnet, dass** 0 % bis 30 % der Durchgangsöffnungen (15) auf den Flanken (14) angeordnet sind.

5. Kolonne (20) nach einem der vorhergehenden Ansprüche, **dadurch gekennzeichnet, dass** die Durchgangsöffnungen (15) lediglich auf den Bergen (12) und Tälern (13) angeordnet sind.

6. Kolonne (20) nach einem der vorhergehenden Ansprüche, **dadurch gekennzeichnet, dass** die Durchgangsöffnungen (15) kreisförmig ausgebildet sind.

7. Kolonne (20) nach einem der vorhergehenden Ansprüche, **dadurch gekennzeichnet, dass** die Sekundärstruktur durch eine Mehrzahl von quer zu den Bergen (12) und Tälern (13) verlaufenden Rillen (16) gebildet ist.

8. Kolonne (20) nach einem der vorhergehenden Ansprüche, **dadurch gekennzeichnet, dass** die Materiallagen (11) einzeln in der Kolonne (20) angeordnet sind, wobei sie lediglich über die Kolonne (20) miteinander verbunden sind, oder dass die Materiallagen (11) zumindest ein Packungspaket (100) bilden, wobei die Materiallagen (11) in dem Packungspaket (100) mechanisch miteinander verbunden sind, oder dass in der Kolonne (20) sowohl einzelne Materiallagen (11) als auch mindestens ein Packungspaket (100) angeordnet sind.

9. Verfahren zur Herstellung einer Packung (10), wobei in einer Mehrzahl von Materiallagen (11) jeweils eine Mehrzahl von alternierend angeordneten Bergen (12) und Tälern (13) gebildet werden, so dass jeweils ein Berg (12) mit einem benachbarten Tal (13) über eine Flanke (14) verbunden ist, und wobei in den Materiallagen (11) jeweils eine Mehrzahl von Durchgangsöffnungen (15) derart ausgebildet wird, dass für die jeweilige Materiallage (11) das Öffnungsverhältnis von durch die Durchgangsöffnungen (15) gebildeter freier Öffnungsfläche zu geschlossener Fläche auf den Bergen (12) und Tälern (13) größer ist als auf den Flanken (14), wobei die Durchgangsöffnungen (15) in einem ebenen Zustand der Materiallagen (11) gebildet werden, und wobei nach dem Bilden der Durchgangsöffnungen (15) die Berge (12) und Täler (13) der Materiallagen (11) gebildet werden.

10. Verfahren zum Stoff- und/ oder Energieaustausch zwischen einer flüssigen Phase (F) und einer gasförmigen Phase (G), mittels einer Kolonne (20) nach einem der Ansprüche 1 bis 8, wobei die flüssige Phase (F) und die gasförmige Phase (G) im Gegenstrom durch die Packung (10) geleitet werden, und wobei die flüssige Phase (F) überwiegend an den Tälern (13) der Materiallagen (11) durch die Packung (10) geleitet wird.
